# EUROPEAN PATENT SPECIFICATION

(11) **EP 2 827 215 B1**
(45) Date of publication and mention of the grant of the patent: **20.12.2017**
(21) Application number: 12870930.0
(22) Date of filing: 14.03.2012
(51) Int. Cl.: G05D 23/19, E21F 1/00, F04D 29/32, F04D 25/06

(54) **SYSTEM AND METHOD FOR ELECTRONIC CONTROL OF THE ROTATION SPEED OF A FAN IMPELLER**
SYSTEM UND METHODE ZUR ELEKTRONISCHEN REGELUNG DER DREHZAHL EINES LÜFTERRADS
SYSTÈME ET PROCÉDÉ DE COMMANDE ÉLECTRONIQUE DE LA VITESSE DE ROTATION D'UNE PALE D'UN VENTILATEUR

(43) Date of publication of application: 21.01.2015
(73) Proprietor: Talleres Zitrón, S.A., 33392 Gijón (Asturias) (ES)
(72) Inventor: ARIAS ÁLVAREZ, Roberto, E-33392 Gijón (Asturias) (ES)
(74) Representative: Ungria López, Javier
(86) International application number: PCT/ES2012/070164
(87) International publication number: WO 2013/135916

(56) References cited:
- WO-A1-2004/100336
- CN-A- 101 498 944
- CN-A- 102 251 980
- JP-A- 2004 278 349
- JP-A- 2007 255 008
- JP-A- 2010 116 768
- JP-A- 2010 116 768
- JP-A- 2010 242 626
- JP-A- 2011 208 442
- US-A1- 2008 074 275
- US-A1- 2011 101 903
- US-B1- 7 064 518

## Description

### OBJECT OF THE INVENTION

The present invention, as expressed in the wording of this specification, relates, on one hand, to a tunnel fan system with an electronic control system of the rotation speed of a fan impeller, and on the other hand, to the method for electronic control of the rotation speed of the aforementioned impeller of the fan. This fan shall be preferably a fan of the type installed on the roof of road tunnels.

### BACKGROUND OF THE INVENTION

The main national and European regulations and directives related to security in road, speedway and highway tunnels with a length greater than 1,000 meters impose the installation of roof or centralized jet ventilation systems in accordance with the results derived from the risk analyses and that depend on different factors, such as the length of the tunnel, its section, the inclination, the direction and the most probable speed of the wind, etc.

Rotation control systems in the impellers of this type of fans are currently located in the electrical rooms at a considerable distance from the fan itself. Usually, the distance between the fans and the electrical rooms ranges between 200 and 1,500 meters. This necessarily requires the placement of power supply lines along the length of the tunnels connecting said electronic modules to the motors that rotate the impellers. When the electronic systems provide power to the motors of the fans, due to the distances existing between the emitter (control systems) and the receiver (motor), reflected waves and harmonics appear in the transmission cable, considerably reducing the amount of energy reaching the motor of the fan and thereby reducing the performance thereof in a significant manner.

The need for these fans to work with the highest efficiency possible must be taken into account, given that, in the case of a potential incident inside the tunnel where the fan is placed, such as a fire, it will be necessary to move as much air as possible in the interior thereof in order to evacuate the smoke and gases generated as a result. The document CN 102 251 980 A discloses a tunnel fan system according to the preamble of claim 1, which includes a switching system to drive the fan either through the inverter or directly with the electric network.

The document JP 2007 255008 A discloses in fig. 3 a tunnel fan with its controller placed in proximity to the fan.

The document JP 2011 208442 A discusses problems due to the use of an inverter to drive a tunnel fan over long cables, and, doing so, mentions the possibility to place the inverter close to the fan.

The present invention presents the following advantages with respect to the existing state of the art:
- Standard and compact electronic equipment;
- Reduction in installation times. Given that the installation of the electronic control systems are located in proximity to the fan, and even within the assembly structure thereof, it allows for the same to be mounted at the factory or to be mounted at the floor of the tunnel prior to the installation on the roof, reducing the assembly time as well as the costs derived thereof.
- Reduction of the costs of the entire electric installation (cables, switches, transformers, generators, etc.).
- Reduction of harmonics in the power supply lines given that the electronic modules are located in proximity to the fans themselves, thereby reducing the apparition of reflected waves and harmonics of the emitted signal.
- Installation of cables without electromagnetic screens. Since the electronic control systems are located in proximity to the motor, the length of cable exposed to potential magnetic fields is very short, due to which electromagnetic screens are not required.
- Elevation of the power factor as of the point of connection to the fan to a value higher than 0.95 thanks to the use of a variable frequency drive.
- Speed control with the elimination of potential pumping and consequent losses of charge among fans connected in parallel.
- Reduction of times for braking and inversion in the rotation of the impeller.
- Less stress on the bearings of the electric motor, with the consequent increase in the useful life thereof.
- Reduction in the value of the intensity of the electric current to equal conditions, with substantial savings in the section of the cables of the tunnel. Given that, by means of the installation of the electronic system object of the present invention in proximity to the fan, the amount of power received by the motor is maximized (and in consequence, the efficiency of the motor is maximized as well), the transmission of a lower amount of energy will be required to obtain the same performance than in the inventions of the state of the art, due to which cables with a smaller diameter will become necessary.
- Elimination of potential breakages due to vibrations in the vanes and corrosion thereof.

### DESCRIPTION OF THE INVENTION

In order to achieve the objectives and avoid the inconveniences indicated above, the invention consists on a system and method for electronic control of the rotation speed of a fan impeller of the type placed in the roof of road tunnels.

Therefore, the electronic control system of the rotation speed of a fan impeller of the type affixed to the roof of a road tunnel, comprises at least the following:
- at least one electronic variable speed drive; and
- at least one bypass module comprising means for the selection of a connection of the fan to the electric network selected between a direct connection and a connection through the electronic variable speed drive, said selection means being configured to select the connection based on the temperature detected by a temperature detector of the fan. Furthermore, according to the invention, the bypass module is located in the interior of a thermally insulated metal box.

Also according to the invention, the elements forming the electronic control system are located in proximity to the fan, and are mounted on the supporting structure of the fan. Thanks to the foregoing, all of the supply cables between the control rooms and the fans are harmonic-free and have currents with a power factor higher than 0.98, while only a cable length of less than 1 m between the variable frequency drive and the electric motor of the fan would not benefit from the absence of the aforementioned harmonics and the existence of currents with a power factor higher than 0.98.

In an embodiment of the invention, the electronic control system comprises at least one harmonic compensation and filtering module, adapted to the power consumed by the fan. This way, it is possible for the power received by the motor of the fan to be completely free of signal harmonics and reflected waves.

In another embodiment of the invention, the electronic system comprises a reversing system of the impeller of the fan.

In another embodiment of the invention, the aforementioned electronic variable speed drive has a minimum IP-54 protection index.

In another embodiment of the invention, the electronic system comprises a single variable speed drive built into the bypass module in the interior of a thermally insulated metal box.

In another embodiment of the invention, the electronic system comprises a single variable speed drive built into the bypass module and the reversing system of the impeller in the interior of a thermally insulated metal box.

In another embodiment of the invention, the electronic system comprises a pluggable connector that completely disconnects the input power to the fan.

On the other hand, the present invention also protects the method of operation of the tunnel fan system described above, which comprises starting the fan by means of a mechanism selected between:
- the at least one variable speed drive when the fan is at a temperature below 60 °C; and
- a direct connection of the fan to the electric network by means of the cancellation of the variable speed drive through the bypass module when the fan is at a temperature between 60 and 401 °C.

In an embodiment of the invention, the method of operation of the tunnel fan system, after the fan has been started, comprises operating said fan by using an element selected among:
- the at least one variable speed drive when the fan is at a temperature below 60 °C;
- a direct connection of the fan to the electric network by means of the cancellation of the variable speed drive through the bypass module when the fan is at a temperature between 60 and 401 °C for at least two hours; and
- the at least one variable speed drive when the fan is at a temperature below 60 °C, starting to operate by means of a direct connection of the fan to the electric network by means of the cancellation of the variable speed drive through the bypass module when the fan exceeds 60° C and up to 401 °C for at least two hours.

### BRIEF DESCRIPTION OF THE FIGURES

Figure 1.- Shows a general view of the module comprising the electronic control system located in the supporting structure of the fan.
Figure 2.- Shows a sectional view of the set of the fan and the electronic control system object of the invention.
Figure 3.- Shows a particular embodiment of the electronic control system object of the present invention.

### DESCRIPTION OF SEVERAL EXAMPLES OF EMBODIMENT OF THE INVENTION

A description of several examples of an embodiment of the invention, in an illustrative rather than limitative manner, is made below, with reference to the numbering adopted in the figures.

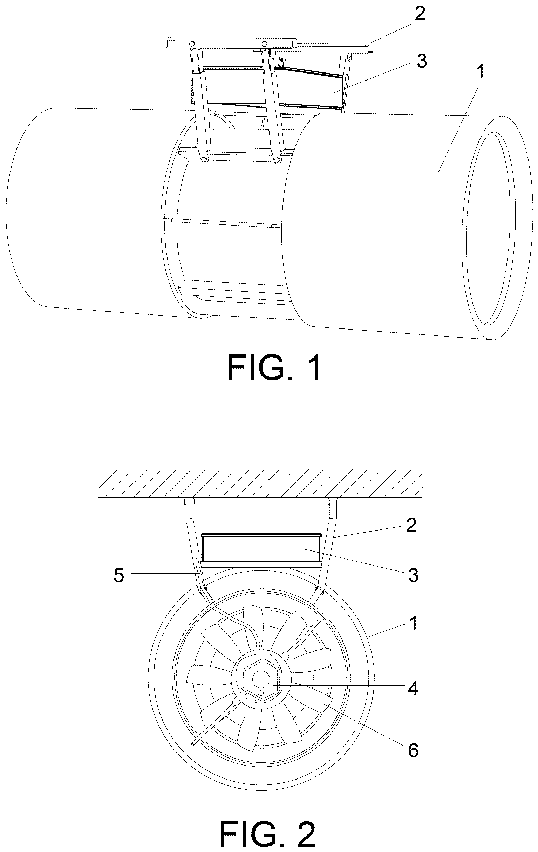

Figure 1 shows a particular embodiment of the invention wherein the rotation control system of the impeller is built into a box (3), which in turn is located in the supporting structure (2) of the fan (1) to the roof of the tunnel where it is installed. The embodiments of the fan (1) and of the supporting structure (2) thereof are only particular examples, and the present invention may be built into any type of fan and supporting structure.

Figure 2 shows a view of the transversal cut of figure 1. Said figure clearly shows that the distance between the box (3) containing the electronic system object of the invention and the motor (4) of the fan (1) is comprised between 20 and 50 centimeters approximately. Said figure shows the cable (5) connecting the electronic system and the motor (1) making the impeller (6) rotate, which passes through the housing of the fan (1) until it reaches the motor (4).

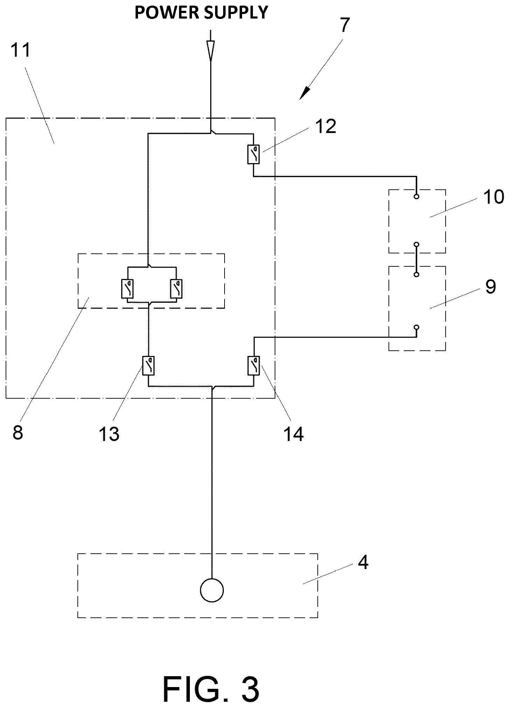

Figure 3 shows a scheme of a particular embodiment of the electronic system (7) object of the present invention. The variable speed drive (9) is connected to the harmonics compensation and filtering module (10), which in each case is adapted to the power consumed by the fan (1). Both elements are in turn connected to the bypass module, in which interior the reversing system of the impeller (8) is built in.

The drive (9) used in this case has an IP-66 protection index, which allows the direct installation thereof on the fan (1), being suitable to withstand the harsh environmental conditions of highway tunnels, jet water washing and also to avoid problems due to overheating.

In the case when the fan (1) is working at 400 °C due to the occurrence of an extreme situation, such as a fire, the variable speed drive (9) will be cancelled by means of the bypass module (11), specifically by means of a first switch (12) that remains open and prevents the current from reaching the drive (9). This way, the fan (1) operates by being connected to the electric network directly.

The entire switchgear making up the reversing system (8) and the bypass module (11) is in the interior of a metal box with thermal insulation in its interior, appropriate to continue operating under emergency conditions for two hours at a temperature of up to 400 °C.

The fans (1) located in the interior of the tunnel can all start with the variable speed drives (9) to eliminate gases in normal transit conditions or when the vehicles are not moving due to an accident without a fire. All the fans (1) regulate their speeds by number of revolutions per minute and in the most convenient direction of flow, in accordance with the environmental conditions.

In the presence of a fire, and with the fans (1) already in operation, they will be regulated depending on the location and characteristics of the fire. The fans above the fire will operate under normal conditions until they reach a temperature of 60 °C. After reaching 60 °C, by sending a command from a thermostat connected to the reversing system of the impeller (8), the switch to the direct operation of the fan (by deactivating the drives and receiving power from the electric network directly) will take place, the fan operating under these conditions whenever the temperature of the fan lays within the range of 60 °C and 401 °C and for at least two hours.

In the presence of a fire and when the fans (1) are off, those fans (1) outside of the range of the fire will start by means of the variable frequency drive (9), and those fans (1) within the area of the fire and at a temperature above 60 °C by means of direct start-up through the electric network, being able to operate under these conditions up to 400 °C for two hours.

The fans will be controlled by a central control, which, through programs receiving information from pressure, temperature and environmental pollution sensors, etc., located in the interior of the tunnel and which, through a bus-type connection made with cables or fire-resistant optical fibers and analyzing all of the parameters, imposes the correct speed and direction for an operation under optimal conditions from a security and energy consumption standpoint.

It should be noted that the direct operation of the fans (1), that is to say, when they are directly supplied by the electric network, is carried out by keeping open the first switch and by keeping closed the second switch (13), such that the entire current would pass directly from the electric network to the motor (4). On the other hand, when the fan (1) operates by means of the drives, the first and third switches (12, 14) are kept closed, while the second (13) is kept open. This way, the current necessarily passes through the drive (9) and through the compensation and filtering module (10).

## Claims

1. Tunnel fan system comprising
- a fan (1),
- a supporting structure (2) for fixing the fan to the roof of a road tunnel,
- an electronic control system (7) of the rotation speed of the fan impeller,
wherein the fan is fixed to the support structure,
wherein the electronic control system comprises:
- at least one electronic variable speed drive (9); and
- at least one bypass module (11) comprising means for the selection of a connection of the fan to the electric network selected between a direct connection and a connection through the electronic variable speed drive,
the tunnel fan system being **characterised in that**
- the fan comprises at least one temperature detector,
- the selection means is configured to select the connection based on the temperature detected by the temperature detector,
- the electronic control system is attached to the supporting structure of the fan,
- the tunnel fan system comprises a thermally insulated metal box (3) and the bypass module is located in the interior of said box.

2. Tunnel fan system according to claim 1, **characterized in that** it comprises at least one harmonics compensation and filtering module (10), adapted to the power consumed by the fan (1).

3. Tunnel fan system according to any one of the preceding claims, **characterized in that** it comprises a reversing system (8) of the impeller (6).

4. Tunnel fan system according to any one of the preceding claims, **characterized in that** said electronic variable speed drive (9) has a minimum IP-54 protection index.

5. Tunnel fan system according to any one of the preceding claims, **characterized in that** it comprises a single variable speed drive (9) built into the bypass module (11) in the interior of a thermally insulated metal box (3).

6. Tunnel fan system according to any one of the claims 1 to 4, **characterized in that** it comprises a single variable speed drive (9) built in the bypass module (11) and the reversion system (8) of the impeller (6) in the interior of a thermally insulated metal box (3).

7. Tunnel fan system according to any one of the claims 1 to 4, **characterized in that** the reversion system (8) of the impeller (6) is built in the bypass module (11) in the interior of a thermally insulated metal box (3).

8. Tunnel fan system according to one of the preceding claims, **characterized in that** it comprises a pluggable connector that completely disconnects the input power to the fan (1).

9. Method of operation of the tunnel fan system described in claims 1 to 8, **characterized in that** it consists in starting the fan (1) by means of a mechanism selected between:
• the at least one variable speed drive (9) when the fan (1) is at a temperature below 60 °C; and
• a direct connection of the fan (1) to the electric network by means of the cancellation of the variable speed drive (9) through the bypass module (11) when the fan (1) is at a temperature between 60 and 401 °C.

10. Method of operation of the tunnel fan system according to claim 9, **characterized in that** after being started, the fan (1) comprises operating by using an element selected among:
• the at least one variable speed drive (9) when the fan (1) is at a temperature below 60 °C;
• a direct connection of the fan (1) to the electric network by means of the cancellation of the variable speed drive (9) through the bypass module (11) when the fan (1) is a temperature between 60 and 401 °C for at least two hours; and
• the at least one variable speed drive (9) when the fan (1) is at a temperature below 60 °C, starting to operate by means of a direct connection of the fan (1) to the electric network by means of the cancellation of the variable speed drive (9) through the bypass module (11) when the fan (1) exceeds 60° C and up to 401 °C for at least two hours.

## Patentansprüche

1. Tunnellüfter-System, umfassend:
- einen Lüfter (1),
- eine Halterung (2) zur Befestigung des Lüfters am Dach eines Straßentunnels,
- eine elektronische Steuerung (7) der Drehzahl des Lüfterrades,
wobei der Lüfter an der Halterung befestigt ist,
wobei die elektronische Steuerung umfasst:
- mindestens einen elektronischen, drehzahlregelbaren Antrieb (9); und
- mindestens ein Nebenschlussmodul (11) mit Einrichtungen zur Auswahl einer Verbindung des Lüfters mit dem elektrischen Netz, die zwischen einer direkten Verbindung und einer Verbindung durch den elektronischen, drehzahlregelbaren Antrieb ausgewählt ist,
wobei das Tunnellüfter-System **dadurch gekennzeichnet ist, dass**
- der Lüfter mindestens einen Temperaturfühler enthält,
- die Auswahleinrichtung ausgelegt ist, die Verbindung basierend auf der durch den Temperaturfühler erfassten Temperatur auszuwählen,
- die elektronische Steuerung an der Halterung des Lüfters befestigt ist,
- das Tunnellüfter-System einen wärmeisolierten Metallkasten (3) aufweist, und das Nebenschlussmodul sich im Innern des Kastens befindet.

2. Tunnellüfter-System nach Anspruch 1, **dadurch gekennzeichnet, dass** es mindestens ein Oberwellenkompensations- und Filterungsmodul (10), angepasst an die durch den Lüfter (1) verbrauchte Leistung, enthält.

3. Tunnellüfter-System nach einem der vorhergehenden Ansprüche, **dadurch gekennzeichnet, dass** es ein Umkehrsystem (8) des Flügelrades (6) enthält.

4. Tunnellüfter-System nach einem der vorhergehenden Ansprüche, **dadurch gekennzeichnet, dass** der elektronische, drehzahlregelbare Antrieb (9) einen Mindestschutzindex IP 54 besitzt.

5. Tunnellüfter-System nach einem der vorhergehenden Ansprüche, **dadurch gekennzeichnet, dass** es einen einzelnen drehzahlregelbaren Antrieb (9) umfasst, der in das Nebenschlussmodul (11) im Inneren eines wärmeisolierten Metallkastens (3) eingebaut ist.

6. Tunnellüfter-System nach einem der Ansprüche 1 bis 4, **dadurch gekennzeichnet, dass** es einen in das Nebenschlussmodul (11) eingebauten, einzelnen drehzahlregelbaren Antrieb (9) und das Umkehrsystem (8) des Flügelrades (6) im Innern eines wärmeisolierten Metallkastens umfasst.

7. Tunnellüfter-System nach einem der Ansprüche 1 bis 4, **dadurch gekennzeichnet, dass** das Umkehrsystem (8) des Flügelrades (6) in dem Nebenschlussmodul (11) im Innern eines wärmeisolierten Metallkastens (3) eingebaut ist.

8. Tunnellüfter-System nach einem der vorhergehenden Ansprüche, **dadurch gekennzeichnet, dass** es einen steckbaren Verbinder umfasst, der die Eingangsleistung an den Lüfter (1) vollständig trennt.

9. Verfahren zum Betrieb des in den Ansprüchen 1 bis 8 beschriebenen Tunnellüfter-Systems, **dadurch gekennzeichnet, dass** es im Starten des Lüfters (1) durch einen Mechanismus besteht, der ausgewählt ist zwischen:
- dem mindestens einen drehzahlregelbaren Antrieb (9), wenn der Lüfter (1) sich auf einer Temperatur unter 60 °C befindet; und
- eine direkte Verbindung des Lüfters (1) mit dem elektrischen Netz durch Abbrechen des drehzahlregelbaren Antriebs (9) durch das Nebenschlussmodul (11), wenn der Lüfter (1) sich auf einer Temperatur zwischen 60 und 401 °C befindet.

10. Verfahren zum Betrieb des Tunnellüfter-Systems nach Anspruch 9, **dadurch gekennzeichnet, dass** es, nachdem der Lüfter (1) gestartet wird, das Betreiben durch Verwendung eines Elements umfasst, das ausgewählt wird zwischen:
- dem mindestens einen drehzahlregelbaren Antrieb (9), wenn sich der Lüfter (1) auf einer Temperatur unter 60°C befindet; und
- einer direkten Verbindung des Lüfters (1) mit dem elektrischen Netz durch Abbrechen des drehzahlregelbaren Antriebs (9) über das Nebenschlussmodul (11), wenn sich der Lüfter (1) mindestens zwei Stunden lang auf einer Temperatur zwischen 60 und 401 °C befindet; und
- dem mindestens einen drehzahlregelbaren Antrieb (9), wenn sich der Lüfter (1) auf einer Temperatur unter 60°C befindet, das Betreiben zu beginnen mittels einer direkten Verbindung des Lüfters (1) mit dem elektrischen Netz durch Abbrechen des drehzahlregelbaren Antriebs (9) über das Nebenschlussmodul (11), wenn der Lüfter (1) mindestens zwei Stunden lang 60°C überschreitet, und bis zu 401°C.

## Revendications

1. Système de ventilateur pour tunnel comprenant
- un ventilateur (1),
- une structure de support (2) pour fixer le ventilateur au plafond d'un tunnel routier,
- un système de commande électronique (7) de la vitesse de rotation de la turbine du ventilateur,
le ventilateur étant fixé à la structure de support,
le système de commande électronique comprenant :
- au moins un variateur de vitesse électronique (9) ; et
- au moins un module de dérivation (11) comprenant des moyens pour la sélection d'une connexion du ventilateur au réseau électrique choisie entre une connexion directe et une connexion par l'intermédiaire du variateur de vitesse électronique,
le système de ventilateur pour tunnel étant **caractérisé en ce que**
- le ventilateur comprend au moins un détecteur de température,
- les moyens de sélection sont configurés pour sélectionner la connexion en fonction de la température détectée par le détecteur de température,
- le système de contrôle électronique est fixé à la structure de support du ventilateur,
- le système de ventilation pour tunnel comprend une boîte métallique (3) thermiquement isolée et le module de dérivation est situé à l'intérieur de ladite boîte.

2. Système de ventilateur pour tunnel selon la revendication 1, **caractérisé en ce qu'**il comporte au moins un module (10) de compensation et de filtrage des harmoniques, adapté à la puissance consommée par le ventilateur (1).

3. Système de ventilateur pour tunnel selon l'une quelconque des revendications précédentes, **caractérisé en ce qu'**il comporte un système (8) de réversion de la turbine (6).

4. Système de ventilateur pour tunnel selon l'une quelconque des revendications précédentes, **caractérisé en ce que** ledit variateur de vitesse électronique (9) a un indice de protection IP-54 minimum.

5. Système de ventilateur pour tunnel selon l'une quelconque des revendications précédentes, **caractérisé en ce qu'**il comprend un seul variateur de vitesse (9) intégré au module de dérivation (11) à l'intérieur d'un boîtier métallique (3) thermiquement isolé.

6. Système de ventilateur pour tunnel selon l'une quelconque des revendications 1 à 4, **caractérisé en ce qu'**il comprend un seul variateur de vitesse (9) intégré au module de dérivation (11) et le système (8) de réversion de la turbine (6) à l'intérieur d'un boîtier métallique (3) thermiquement isolé.

7. Système de ventilateur pour tunnel selon l'une quelconque des revendications 1 à 4, **caractérisé en ce que** le système (8) de réversion de la turbine (6) est intégré au module de dérivation (11) à l'intérieur d'un boîtier métallique (3) thermiquement isolé.

8. Système de ventilateur pour tunnel selon l'une des revendications précédentes, **caractérisé en ce qu'**il comprend un connecteur enfichable qui déconnecte complètement l'alimentation du ventilateur (1).

9. Procédé de fonctionnement du système de ventilation à tunnel décrit dans les revendications 1 à 8, **caractérisé en ce qu'**il consiste à démarrer le ventilateur (1) au moyen d'un mécanisme choisi parmi :
• ledit au moins un variateur de vitesse (9) lorsque le ventilateur (1) est à une température inférieure à 60°C ; et
• une connexion directe du ventilateur (1) au réseau électrique au moyen de la désactivation du variateur de vitesse (9) par l'intermédiaire du module de dérivation (11) lorsque le ventilateur (1) est à une température comprise entre 60 et 401°C.

10. Procédé de fonctionnement du système de ventilation pour tunnel selon la revendication 9, **caractérisé en ce que** le ventilateur (1), après son démarrage, comprend le fait de fonctionner en utilisant un élément choisi parmi :
• ledit au moins un variateur de vitesse (9) lorsque le ventilateur (1) est à une température inférieure à 60°C ;
• une connexion directe du ventilateur (1) au réseau électrique au moyen de la désactivation du variateur de vitesse (9) par l'intermédiaire du module de dérivation (11) lorsque le ventilateur (1) est à une température comprise entre 60 et 401°C pour au moins deux heures ; et
• ledit au moins un variateur de vitesse (9), lorsque le ventilateur (1) est à une température inférieure à 60°C, commence à fonctionner par une connexion directe du ventilateur (1) au réseau électrique au moyen de la désactivation du variateur de vitesse (9) par l'intermédiaire du module de dérivation (11) lorsque le ventilateur (1) dépasse 60°C et jusqu'à 401°C pendant au moins deux heures.
